# EUROPÄISCHE PATENTSCHRIFT

(11) **EP 1 518 469 B1**
(45) Veröffentlichungstag und Bekanntmachung des Hinweises auf die Patenterteilung: **04.10.2006**
(21) Anmeldenummer: 03021508.1
(22) Anmeldetag: 24.09.2003
(51) Int. Cl.: A24C 5/34, G01N 21/952, G01N 21/88

(54) **Verfahren und Vorrichtung zur Überwachung eines Materialstrangs der tabakverarbeitenden Industrie**
Method and apparatus for inspecting a rod of material of the tobacco industry
Procédé et appareil pour l'investigation d'une tige de matériau de l'industrie du tabac

(43) Veröffentlichungstag der Anmeldung: 30.03.2005
(73) Patentinhaber: Hauni Maschinenbau Aktiengesellschaft, 21033 Hamburg (DE)
(72) Erfinder: Behncke, Hans-Hermann, D-25451, Quickborn (DE); Götz, Jürgen, D-22885, Barsbüttel (DE); Hinze, Herbert, D-21031, Hamburg (DE); Westphal, Uwe, D-21481, Lauenburg (DE)
(74) Vertreter: Eisenführ, Speiser & Partner

(56) Entgegenhaltungen:
- EP-A- 0 582 868
- DE-A- 2 940 408
- DE-A- 3 414 138
- DE-A- 3 418 079
- DE-A- 19 713 973
- US-A- 5 126 872
- US-B1- 6 169 600

## Beschreibung

Die Erfindung betrifft ein Verfahren und eine Vorrichtung zur optischen Überwachung eines Materialstrangs der tabakverarbeitenden Industrie, insbesondere eines Zigarettenstrangs.

Optische Prüfmittel der eingangs bezeichneten Gattung dienen zum Erfassen von Fehlern und Unregelmäßigkeiten an einem Materialstrang. Fehler in der Umhüllung eines bewegten Materialstrangs der tabakverarbeitenden Industrie, beispielsweise in der Papierumhüllung eines Zigarettenstrangs oder eines Filterstrangs, wie Löcher, Flecken, fehlende oder falsch platzierte Aufdrucke, lichtreflektierende Klebstellen usw., bewirken eine Änderung der Reflexion von auf die Hülle fallendem Licht. Löcher in der Umhüllung eines Zigarettenstrangs wirken beispielsweise wie dunkle Flecken und setzen den Reflexionsgrad herab. Aufdrucke verändern den Reflexionsgrad der Umhüllung je nach ihrem Farbton. Leimflecken außerhalb der Leimnaht erhöhen die Reflexion des Lichts an der Umhüllung des Zigarettenstrangs. So kann aus der Intensität des am bewegten Strang reflektierten Lichts auf den Zustand des Strangs geschlossen werden.

Durch die DE-OS 29 40 408 der Anmelderin ist eine Vorrichtung bekannt, mit der Licht einer Lichtquelle durch ein lichtdurchlässiges Ringprisma in einem Winkel zur Strangnormalen schräg auf die Oberfläche des bewegten Materialstrangs geleitet wird und nach der Reflexion an der Umhüllung des Materialstrangs mit einem Lichtleitmittel in Form von Glasfasern im Reflexionswinkel aufgefangen und zu einem opto-elektrischen Wandler geleitet wird, der der Intensität des reflektierten Lichts entsprechende Messsignale erzeugt. Aufgrund von Abweichungen der Messsignale von vorgegebenen Sollwertsignalen können Herstellungsmaßnahmen und/oder der Auswurf fehlerhafter Artikel gesteuert werden. Der schräge Lichteinfall bei der bekannten Vorrichtung erhöht zwar die Kontraste der auf Fehlern beruhenden Unregelmäßigkeiten des zu prüfenden Materialstrangs, was eine Vergrößerung der Empfindlichkeit der Prüfanordnung bedeutet. Der schräge Lichteinfall bewirkt aber auch scharfe Schatten an Falten und Wellen der Strangumhüllung, welche für die Prüfanordnung Fehler der Strangumhüllung vortäuschen können und dementsprechend zu unerwünschtem Ausschuss führen.

Die DE 34 14 138 A1 der Anmelderin offenbart eine ähnliche Vorrichtung, bei der die Beleuchtung durch zwei ringförmige Anordnungen von Lichtquellen erfolgt, denen jeweils ein als diffuser Lichtleiter dienendes Ringprisma zugeordnet ist, das das Licht jedoch ebenfalls schräg auf die Strangoberfläche richtet. Das dann von der Oberfläche reflektierte Licht gelangt durch radiale Kanäle zu ringförmig um den Materialstrang angeordneten Empfängern.

Die DE 34 18 079 A1 der Anmelderin offenbart eine ähnliche Vorrichtung, bei der zum optischen Abtasten der Oberfläche eines Zigarettenstrangs ein den Strang umgebender Prüfkopf vorgesehen ist, in dem rings um den Strang Strahlenführungsmittel angeordnet sind, welche Licht auf die Strangoberfläche und an der strangoberfläche reflektiertes Licht zu einem opto-elektrischen Wandler leiten. Als Strahlenführungsmittel sind bei dieser bekannten Vorrichtung rings um die Strangführung optische Linsen und Spiegelsysteme angeordnet, welche das Licht über einen Umlenkspiegel und einen teildurchlässigen Spiegel auf die Strangoberfläche leiten und das von der Strangoberfläche reflektierte Licht über den teildurchlässigen Spiegel dem opto-elektrischen Wandler zuführen.

Aufgabe der vorliegenden Erfindung ist es, Verfahren und Vorrichtungen der eingangs genannten Art zu verbessern.

Diese Aufgabe wird erfindungsgemäß durch ein Verfahren gemäß Anspruch 1 und durch eine Vorrichtung gemäß Anspruch 9 gelöst.

Einer der Vorteile der Erfindung liegt darin, dass durch die erfindungsgemäße Einstrahlung des Lichts parallel zum Materialstrang beziehungsweise durch die erfindungsgemäße Detektion des reflektierten Lichts parallel zum Materialstrang die gesamte Vorrichtung erheblich kompakter in ihrem Umfang ausgebildet werden kann. Die Kompaktheit derartiger Prüfmittel ist jedoch innerhalb von Zigarettenstrangmaschinen von ganz erheblicher Bedeutung. Denn somit kann insgesamt die Zigarettenstrangmaschine kompakter aufgebaut werden. Insbesondere können bei Zigarettenherstellungsmaschinen mit zwei parallelen Zigarettensträngen die beiden Stränge näher aneinander gerückt werden.

Ein weiterer Vorteil der erfindungsgemäßen Verfahren und Vorrichtungen ist es, dass dank der steilen Einstrahlung des optischen Messstrahls in einem Winkel zwischen etwa 65° und etwa 90° zum Materialstrang ein nahezu schattenfreies Bild der Oberfläche des Materialstrangs gewonnen wird, ohne das - wie beispielsweise im Stand der Technik notwendig - das zusätzliche Beleuchten des Materialstrangs von einer anderen Richtung notwendig wäre.

Die vorgenannten Vorteile werden unter anderem dadurch erreicht, dass trotz einer platzsparenden zum Materialstrang parallelen Einstrahlung des optischen Strahls durch einen abbildenden Strahlengang eine Umleitung oder Umlenkung des Strahls in einem steilen Winkel von etwa 65° bis etwa 90° zum Materialstrang auf den Materialstrang vorgenommen wird. Diese Umlenkung lässt sich bevorzugt durch ein entsprechendes Ringprisma oder ein Polygonprisma erreichen, welches zur Umleitung oder Umlenkung des optischen Strahls auf den Materialstrang und/oder zur Umleitung oder Umlenkung des von dem Materialstrang reflektierten Strahls auf einen Detektor verwendet werden kann. Dabei ist es bevorzugt, wenn der zum Materialstrang parallel verlaufende optische Strahl auf einer flachen Seite des Prismas in das Prisma eingestrahlt und innerhalb des Prismas mittels einer entsprechend abgeschrägten Seite des Prismas auf den Materialstrang umgelenkt beziehungsweise von dem Materialstrang auf den Detektor umgelenkt wird. Vorzugsweise weisen die schräge Seite des Prismas für die Umlenkung des Strahls auf den Materialstrang und die schräge Seite des Prismas für die Umlenkung des Strahls von dem Materialstrang auf den Detektor die gleiche Neigung auf.

Bei den Ring- oder Polygonprismen kann es sich jeweils um mehrteilige oder einstückige Prismen handeln. Auch kann das Prisma zum Umleiten des optischen Strahls auf den Materialstrang einstückig mit dem Prisma zum Umleiten des reflektierten Strahls auf den Detektor ausgebildet sein.

Bei einer bevorzugten Ausführungsform der Erfindung wird weisses Licht als optischer Strahl zur Überwachung des Materialstrangs verwendet. Das weisse Licht kann beispielsweise mit mindestens einer Leuchtdiode oder einem Laser erzeugt werden.

Lichtquellen zur Erzeugung des mindestens einen optischen Strahls werden bevorzugt ringförmig und bevorzugt im gleichen Abstand zueinander um den Materialstrang herum angeordnet, um den optischen Strahl parallel zum Materialstrang abzugeben. Bevorzugt werden als Lichtquellen Leuchtdioden verwendet, um eine maximale Platzersparnis zu erreichen.

Weiter bevorzugt ist es, wenn auch die Fotodetektoren ringförmig um den Materialstrang, bevorzugt in gleichem Abstand zueinander, angeordnet sind.

Bei einer weiteren bevorzugten Ausführungsform sind die den optischen Strahl ablenkenden Ebenen einer Änderung des Brechungsindex, bspw. die reflektierenden schrägen Flächen des jeweiligen Prismas, als gekrümmte Flächen ausgebildet, um einen bestimmten Strahlengang zu erzielen, insbesondere um eine verzerrungsfreie Abbildung des optischen Strahls zu erzielen.

Bei einer weiteren bevorzugten Ausführungsform der Erfindung sind mindestens zwei Komponenten der ersten oder der zweiten abbildenden Optik miteinander verklebt, bspw. die Prismen mit den ggf. vorhandenen Fokussierlinsen, Blenden und dergleichen, oder auch mit den Detektoren, um einen einstückigen Rotationskörper um den Materialstrang herum zu bilden.

Das Detektieren des reflektierten Strahls umfasst vorzugsweise das Erzeugen eines Messsignals und, weiter bevorzugt durch Vergleich mit einem Referenzsignal, das Auswerten des Messsignals. Hierzu ist bevorzugt im Detektor oder dem Detektor zugeordnet eine Auswerteschaltung vorgesehen, die das Auswerten des Messsignals vornimmt und die Auswertung bevorzugt anzeigt oder speichert. Vorteilhaft geschieht das Auswerten des Messsignals durch einen Vergleich des Messsignals mit einem oberen und/oder mit einem unteren Grenzwert.

Weitere bevorzugte Ausführungsformen der Erfindung sind in den Unteransprüchen angegeben.

Mit Bezug auf die begleitenden Zeichnungen wird nun eine Ausführungsform der Erfindung beschrieben.

Die Zeichnungen zeigen:
- Figur 1: eine perspektivische Ansicht einer Zigarettenstrangmaschine; und
- Figur 2: einen Querschnitt durch eine Ausführungsform einer erfindungsgemäßen Vorrichtung zur optischen Überwachung eines Materialsstrangs der tabakverarbeitenden Industrie.

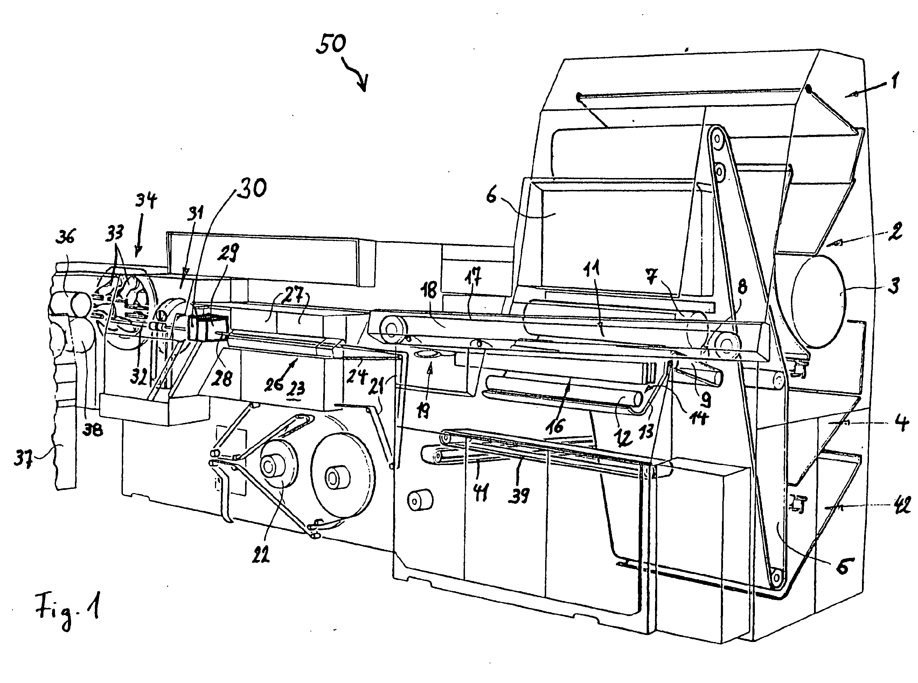

Figur 1 zeigt eine perspektivische Ansicht einer Zigarettenstrangmaschine 50 der Anmelderin vom Typ Protos. Die Zigarettenstrangmaschine 50 funktioniert wie folgt: Von einer Schleuse 1 wird ein Vorverteiler 2 portionsweise mit Tabak beschickt. Eine Entnahmewalze 3 des Vorverteilers 2 ergänzt gesteuert einen Vorratsbehälter 4 mit Tabak, aus dem ein Steilförderer 5 Tabak entnimmt und einen Stauschacht 6 gesteuert beschickt. Aus dem Stauschacht 6 entnimmt eine Stiftwalze 7 einen gleichförmigen Tabakstrom, der von einer Ausschlagwalze 8 aus den Stiften der Stiftwalze 7 herausgeschlagen und auf ein mit konstanter Geschwindigkeit umlaufendes Streutuch 9 geschleudert wird. Ein auf dem Streutuch 9 gebildetes Tabakvlies wird in eine Sichteinrichtung 11 geschleudert, die im wesentlichen aus einem Luftvorhang besteht, den größere bzw. schwerere Tabakteile passieren, während alle anderen Tabakteilchen von der Luft in einen von einer Stiftwalze 12 und einer Wand 13 gebildeten Trichter 14 gelenkt werden. Von der Stiftwalze 12 wird der Tabak in einen Tabakkanal 16 gegen einen Strangförderer 17 geschleudert, an dem der Tabak mittels in eine Unterdruckkammer 18 gesaugter Luft gehalten und ein Tabakstrang aufgeschauert wird.

Ein Egalisator 19 entfernt überschüssigen Tabak von dem Tabakstrang, der dann auf einen im Gleichlauf geführten Zigarettenpapierstreifen 21 gelegt wird. Der Zigarettenpapierstreifen 21 wird von einer Bobine 22 abgezogen, durch ein Druckwerk 23 geführt und auf ein angetriebenes Formatband 24 gelegt. Das Formatband 24 transportiert den Tabakstrang und den Zigarettenpapierstreifen 21 durch ein Format 26, in dem der Zigarettenpapierstreifen 21 um den Tabakstrang gefaltet wird, so dass noch eine Kante absteht, die von einem nicht dargestellten Leimapparat in bekannter Weise beleimt wird. Darauf wird die Klebnaht geschlossen und von einer Tandemnahtplätte 27 getrocknet.

Ein so gebildeter Zigarettenstrang 28 durchläuft ein Strangdichtemessgerät 29, das den Egalisator 19 steuert, und eine erfindungsgemäße Vorrichtung 30 zur optischen Überwachung des Zigarettenstrangs 28, welcher anschließend von einem Messerapparat 31 in doppeltlange Zigaretten 32 geschnitten wird. Die doppeltlangen Zigaretten 32 werden von einer gesteuerte Arme 33 aufweisenden Übergabevorrichtung 34 einer Übernahmetrommel 36 einer Filteransetzmaschine 37 übergeben, auf deren Schneidtrommel 38 sie mit einem Kreismesser in Einzelzigaretten geteilt werden.

Förderbänder 39, 41 fördern überschüssigen Tabak in einen unter dem Vorratsbehälter 4 angeordneten Behälter 42, aus dem der rückgeführte Tabak von dem Steilförderer 5 wieder entnommen wird.

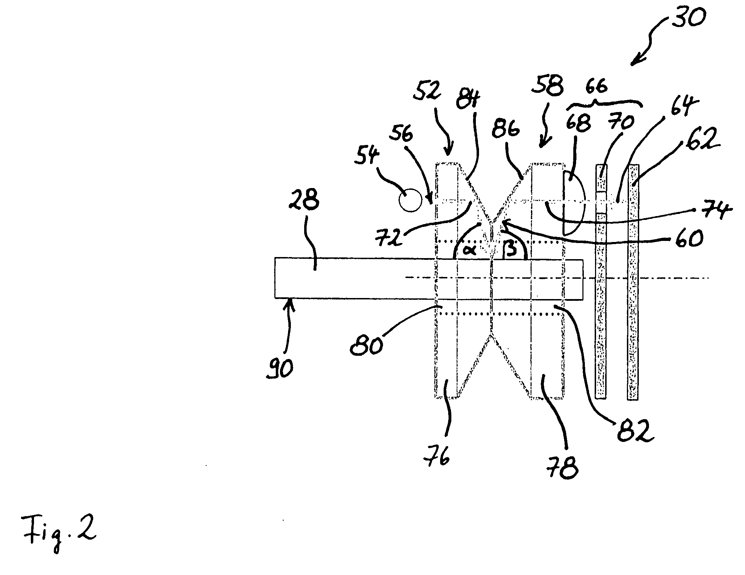

Figur 2 zeigt einen Querschnitt durch die Vorrichtung 30 zur optischen Überwachung des Zigarettenstrangs 28, mit einer ersten Optik 52 zum Umleiten von parallel zum Zigarettenstrang 28 von einer ringförmigen Lichtquelle 54 in gleichem Abstand zueinander zur Verfügung gestellter optischer Strahlen 56, um die Strahlen 56 in einem steilen Winkel auf den Zigarettenstrang 28 treffen zu lassen, mit einer zweiten Optik 58 zum Umleiten der von dem Zigarettenstrang 28 in einem steilen Winkel zum Zigarettenstrang 28 reflektierten Strahlen 60 in eine parallel zum Zigarettenstrang 28 verlaufende Richtung, und mit einem ringförmigen Detektor 62 mit in gleichem Abstand zueinander angeordneten (nicht dargestellten) Photozellen zum Detektieren der parallel zum Zigarettenstrang 28 verlaufenden Strahlen 64, wobei zwischen dem Umlenken der Strahlen 60 mittels der zweiten Optik 58 und der Detektion der umgelenkten Strahlen 64 eine Abbildungsoptik 66 mit einer Fokussierlinse 68 und mit einer Blende 70 vorgesehen ist. Aus Gründen der besseren Darstellbarkeit ist in der Figur 2 nur eine Lichtquelle 54 und einer der Strahlen 56 bzw. 60 dargestellt. Die Funktion der Optiken 52 bzw. 58 sei daher im folgenden auch nur anhand des einen dargestellten Strahls 56 bzw. 60 beschrieben.

Die erste Optik 52 erzeugt einen abbildenden Strahlengang 72 zum Umleiten des Strahls 56 aus dem zum Zigarettenstrang 28 parallelen Verlauf in den zum Zigarettenstrang 28 steilen Verlauf und die zweite Optik 58 erzeugt einen abbildenden Strahlengang 74 zum Umleiten des Strahls 60 aus dem zum Zigarettenstrang 28 steilen Verlauf in den zum Zigarettenstrang 28 parallelen Verlauf. Hierzu weist die erste Optik 52 ein optisches Prisma 76 und die zweite Optik 58 ein optisches Prisma 78 auf.

Beide Prismen 76 und 78 sind Teil des abbildenden Strahlengangs der jeweiligen Optik 52 bzw. 58 und sind ringförmig ausgebildet, so dass der Zigarettenstrang 28 durch entsprechende Durchbrüche 80 bzw. 82 in den Prismen 76 bzw. 78 hindurchtreten kann. Das Prisma 76 weist eine kegelförmige Spiegelfläche 84 zum Umleiten des Strahls 56 aus dem zum Zigarettenstrang 28 parallelen Verlauf in den zum Zigarettenstrang 28 steilen Verlauf gemäß Strahlengang 72 auf. Das Prisma 78 weist eine kegelförmige Spiegelfläche 86 zum Umleiten des Strahls 60 aus dem zum Zigarettenstrang 28 steilen Verlauf in den zum Zigarettenstrang 28 parallelen Verlauf gemäß Strahlengang 74 auf. Die Neigungen der kegelförmigen Spiegelflächen 84 und 86 entsprechen einander. Die kegelförmigen Spiegelflächen 84 und 86 sind leicht gekrümmt ausgebildet (nicht dargestellt), um beim Umleiten des Strahls 56 bzw. 60 den gewünschten dargestellten Strahlengang 72 und 74 zu erzeugen und eine im wesentlichen verzerrungsfreie Abbildung des Strahls 56 bzw. 60 zu erzielen. Beide Prismen 76 und 78 sind miteinander verklebt.

Der steile Winkel α zwischen Zigarettenstrang 28 und Strahl 56 beim Auftreffen des Strahls 56 auf den Zigarettenstrang 28 und der steile Winkel β zwischen Zigarettenstrang 28 und Strahl 60 beim Reflektieren des Strahls 60 durch den Zigarettenstrang 28 liegt bei etwa 75°.

Durch das steile Einstrahlen des bspw. weissen Lichts 56 der Lichtquelle 54 gemäß Winkel α lässt sich die Oberfläche 90 des Zigarettenstrangs 28 nahezu schattenfrei untersuchen, während gleichzeitig durch das Einstrahlen bzw. Detektieren des Lichts 56, 60 parallel zum Zigarettenstrang 28 eine sehr kompakte Bauweise der Vorrichtung 30 erreicht wird.

Nicht dargestellt ist im Detektor 62 oder alternativ dem Detektor 62 zugeordnet eine Auswerteschaltung vorgesehen, die ein vom Detektor 62 erzeugtes Messsignal auswertet. Dabei prüft die Auswerteschaltung insbesondere das Messsignal daraufhin, ob es zuvor in der Auswerteschaltung abgelegte obere und untere Grenzwerte für das Messsignal überschreitet. Diese oberen und unteren Grenzwerte des Messsignals repräsentieren die Toleranz, die beispielsweise für den Kontrast eines Aufdruckes auf dem Materialstrang 28 noch akzeptabel sind. Auf diese Weise kann die Auswerteschaltung bei Überschreiten dieser Grenzwerte einer Auswurfeinrichtung mitteilen, dass die entsprechende Zigarette 32 oder Zigaretten 32, die eine solche Überschreitung der vorgegebenen Grenzwerte aufweisen, aussortiert werden können.

## Patentansprüche

1. Verfahren zur optischen Überwachung eines Materialstrangs (28) der tabakverarbeitenden Industrie, insbesondere eines Zigarettenstrangs (28), mit den Schritten:
mindestens ein optischer Strahl (56) wird im wesentlichen parallel zum Materialstrang (28) zur Verfügung gestellt,
der Strahl (56) wird umgeleitet, um in einem steilen Winkel (α) auf den Materialstrang (28) zu treffen,
der von dem Materialstrang (28) in einem steilen Winkel (β) zum Materialstrang (28) reflektierte Strahl (60) wird in eine im wesentlichen parallel zum Materialstrang (28) verlaufende Richtung umgeleitet, und
der im wesentlichen parallel zum Materialstrang (28) verlaufende Strahl (64) wird detektiert,
**dadurch gekennzeichnet, dass** als steiler Winkel (α) des Auftreffens und/oder als steiler Winkel (β) des Reflektierens ein Winkel (α, β) zwischen etwa 65° und etwa 90° zwischen Materialstrang (28) und Strahl (56, 60) verwendet wird.

2. Verfahren nach dem vorstehenden Anspruch,
wobei als steiler Winkel (α) des Auftreffens und/oder als steiler Winkel (β) des Reflektierens ein Winkel (α, β) zwischen etwa 75° und etwa 90°, verwendet wird.

3. Verfahren nach einem der vorstehenden Ansprüche,
wobei das Umleiten des Strahls (56) aus dem zum Materialstrang (28) im wesentlichen parallelen Verlauf in den zum Materialstrang (28) steilen Verlauf und/oder aus dem zum Materialstrang (28) steilen Verlauf in den zum Materialstrang (28) im wesentlichen parallelen Verlauf durch einen abbildenden Strahlengang (72, 74) vorgenommen wird.

4. Verfahren nach dem vorstehenden Anspruch,
wobei in dem abbildenden Strahlengang (72, 74) mindestens eine Reflektion des Strahls (56, 60) vorgenommen wird.

5. Verfahren nach dem vorstehenden Anspruch,
wobei die mindestens eine Reflektion an einer glatten und/oder gekrümmten Ebene (84, 86) einer Brechungsindexänderung vorgenommen wird.

6. Verfahren nach einem der vorstehenden Ansprüche,
wobei als optischer Strahl (56) weisses, bevorzugt mittels einer Leuchtdiode (54) erzeugtes, Licht (56) verwendet wird.

7. Verfahren nach einem der vorstehenden Ansprüche,
wobei das Detektieren des Strahls (64) das Erzeugen eines Messsignals und, bevorzugt durch Vergleich mit einem Referenzsignal, das Auswerten des Messsignals umfasst.

8. Verfahren nach dem vorstehenden Anspruch,
wobei das Auswerten des Messsignals durch einen Vergleich gegen einen oberen und/oder einen unteren Grenzwert erfolgt.

9. Vorrichtung zur optischen Überwachung eines Materialstrangs (28) der tabakverarbeitenden Industrie, insbesondere eines Zigarettenstrangs (28), mit:
einer ersten Optik (52) zum Umleiten mindestens eines im wesentlichen parallel zum Materialstrang (28) zur Verfügung gestellten optischen Strahls (56), um den Strahl (56) in einem steilen Winkel (α) auf den Materialstrang (28) treffen zu lassen,
einer zweiten Optik (58) zum Umleiten des von dem Materialstrang (28) in einem steilen Winkel (β) zum Materialstrang (28) reflektierten Strahls (60) in eine im wesentlichen parallel zum Materialstrang (28) verlaufende Richtung, und
mindestens einem Detektor (62) zum Detektieren des im wesentlichen parallel zum Materialstrang (28) verlaufenden Strahls (64), **dadurch gekennzeichnet, dass** der steile Winkel (α) des Auftreffens und/oder der steile Winkel (β) des Reflektierens zwischen Materialstrang (28) und Strahl (56, 60) zwischen etwa 65° und etwa 90° liegt.

10. Vorrichtung nach dem vorstehenden Anspruch,
wobei der steile Winkel (α) des Auftreffens und/oder der steile Winkel (β) des Reflektierens zwischen Materialstrang (28) und Strahl (56, 60) zwischen etwa 75° und etwa 90°, liegt.

11. Vorrichtung nach einem der beiden vorstehenden Ansprüche,
wobei die erste und/oder die zweite Optik (52, 58) einen abbildenden Strahlengang (72, 74) zum Umleiten des Strahls (56, 60) aus dem zum Materialstrang (28) im wesentlichen parallelen Verlauf in den zum Materialstrang (28) steilen Verlauf und/oder aus dem zum Materialstrang (28) steilen Verlauf in den zum Materialstrang (28) im wesentlichen parallelen Verlauf aufweist.

12. Vorrichtung nach einem der drei vorstehenden Ansprüche,
wobei die erste und/oder die zweite Optik (52, 58) mindestens ein optisches Prisma (76, 78) zum Umleiten des Strahls (56, 60) aus dem zum Materialstrang (28) im wesentlichen parallelen Verlauf in den zum Materialstrang (28) steilen Verlauf und/oder aus dem zum Materialstrang (28) steilen Verlauf in den zum Materialstrang (28) im wesentlichen parallelen Verlauf aufweist.

13. Vorrichtung nach dem vorstehenden Anspruch,
wobei das mindestens eine Prisma (76, 78) als Polygonprisma ausgebildet ist.

14. Vorrichtung nach einem der beiden vorstehenden Ansprüche,
wobei das mindestens eine Prisma (76, 78) ringförmig ausgebildet ist.

15. Vorrichtung nach einem der drei vorstehenden Ansprüche,
wobei das mindestens eine Prisma (76, 78) Teil eines abbildenden Strahlengangs (72, 74) ist.

16. Vorrichtung nach einem der drei vorstehenden Ansprüche,
wobei das mindestens eine Prisma (76, 78) eine im wesentlichen kegelförmige Spiegelfläche (84, 86) zum Umleiten des Strahls (56) aus dem zum Materialstrang (28) im wesentlichen parallelen Verlauf in den zum Materialstrang (28) steilen Verlauf und/oder zum Umleiten des Strahls (60) aus dem zum Materialstrang (28) steilen Verlauf in den zum Materialstrang (28) im wesentlichen parallelen Verlauf aufweist.

17. Vorrichtung nach dem vorstehenden Anspruch,
wobei die kegelförmige Spiegelfläche (84, 86) gekrümmt ausgebildet ist, um beim Umleiten des Strahls (56, 60) einen gewünschten Strahlengang (72, 74) zu erzeugen.

18. Vorrichtung nach einem der vorstehenden Ansprüche 9 bis 17,
mit einem ersten Prisma (76) zum Umleiten des Strahls (56) aus dem zum Materialstrang (28) im wesentlichen parallelen Verlauf in den zum Materialstrang (28) steilen Verlauf,
mit einem zweiten Prisma (78) zum Umleiten des Strahls (60) aus dem zum Materialstrang (28) steilen Verlauf in den zum Materialstrang (28) im wesentlichen parallelen Verlauf,
wobei das erste (76) und das zweite Prisma (78) einstückig ausgebildet sind.

19. Vorrichtung nach einem der vorstehenden Ansprüche 9 bis 18,
mit mindestens zwei Detektoren (62),
wobei die mindestens zwei Detektoren (62) ringförmig, bevorzugt in gleichem Abstand zueinander, angeordnet sind.

20. Vorrichtung nach einem der vorstehenden Ansprüche 9 bis 19,
mit mindestens zwei optischen Strahlen (56),
wobei die mindestens zwei optischen Strahlen (56) ringförmig, bevorzugt in gleichem Abstand zueinander, zur Verfügung gestellt werden.

21. Vorrichtung nach einem der vorstehenden Ansprüche 9 bis 20,
mit mindestens einer Lichtquelle (54), um den optischen Strahl (56) zur Verfügung zu stellen.

22. Vorrichtung nach dem vorstehenden Anspruch,
wobei die mindestens eine, bevorzugt weisse, Lichtquelle (54) mindestens eine Leuchtdiode und/oder mindestens einen Laser umfasst.

23. Vorrichtung nach einem der vorstehenden Ansprüche 9 bis 21,
wobei zwischen Reflektion und Detektion des Strahls (60, 64) eine, bevorzugt eine Fokussierlinse (68) und/oder eine Blende (70) umfassende, Abbildungsoptik (66) vorgesehen ist.

## Claims

1. Method for visually monitoring a material rod (28) of the tobacco-processing industry, in particular a cigarette rod (28), comprising the following steps:
at least one optical beam (56) is provided substantially parallel to the material rod (28),
the beam (56) is deflected to strike the material rod (28) at a steep angle (α),
the beam (60) reflected by the material rod (28) at a steep angle (β) to the material rod (28) is deflected in a direction extending substantially parallel to the material rod (28), and
the beam (64) extending substantially parallel to the material rod (28) is detected,
**characterised in that** an angle (α, β) between about 65° and about 90° between material rod (28) and beam (56, 60) is used as the steep angle (α) of incidence and/or as the steep angle (β) of reflection.

2. Method according to the preceding claim, wherein an angle (α, β) between about 75° and about 90° is used as the steep angle (α) of incidence and/or as the steep angle (β) of reflection.

3. Method according to either of the preceding claims, wherein the beam (56) is deflected from the course that is substantially parallel to the material rod (28) into the course that is steep with respect to the material rod (28) and/or from the course that is steep with respect to the material rod (28) into the course that is substantially parallel to the material rod (28) by a focussing beam path (72, 74).

4. Method according to the preceding claim, wherein there is at least one reflection of the beam (56, 60) in the focussing beam path (72, 74).

5. Method according to the preceding claim, wherein the at least one reflection is executed on a flat and/or curved plane (84, 86) of a change in the refractive index.

6. Method according to any one of the preceding claims, wherein white light (56), preferably generated by means of a light emitting diode (54), is used as the optical beam (56).

7. Method according to any one of the preceding claims, wherein detection of the beam (64) includes generating a measuring signal and, preferably by comparison with a reference signal, evaluation of the measuring signal.

8. Method according to the preceding claim, wherein the measuring signal is evaluated by a comparison with an upper and/or a lower limiting value.

9. Device for visually monitoring a material rod (28) of the tobacco-processing industry, in particular a cigarette rod (28), comprising:
a first lens (52) for deflecting at least one optical beam (56) provided substantially parallel to the material rod (28) in order to allow the beam (56) to strike the material rod (28) at a steep angle (α),
a second lens (58) for deflecting the beam (60) reflected by the material rod (28) at a steep angle (β) to the material rod (28) in a direction substantially parallel to the material rod (28), and
at least one detector (62) for detecting the beam (64) extending substantially parallel to the material rod (28), **characterised in that** the steep angle (α) of incidence and/or the steep angle (β) of reflection between the material rod (28) and beam (56, 60) is between about 65° and 90°.

10. Device according to the preceding claim, wherein the steep angle (α) of incidence and/or the steep angle (β) of reflection between the material rod (28) and beam (56, 60) is between about 75° and 90°.

11. Device according to either of the two preceding claims, wherein the first and/or the second lens(es) (52, 58) comprise a focussing beam path (72, 74) for deflecting the beam (56, 60) from the course that is substantially parallel to the material rod (28) into the course that is steep with respect to the material rod (28) and/or from the course that is steep with respect to the material rod (28) into the course that is substantially parallel to the material rod (28).

12. Device according to any one of the three preceding claims, wherein the first and/or the second lens(es) (52, 58) comprise at least one optical prism (76, 78) for deflecting the beam (56, 60) from the course that is substantially parallel to the material rod (28) into the course that is steep with respect to the material rod (28) and/or from the course that is steep with respect to the material rod (28) into the course that is substantially parallel to the material rod (28).

13. Device according to the preceding claim, wherein the at least one prism (76, 78) is constructed as a polygonal prism.

14. Device according to either of the two preceding claims, wherein the at least one prism (76, 78) is annular.

15. Device according to any one of the three preceding claims, wherein the at least one prism (76, 78) is part of a focussing beam path (72, 74).

16. Device according to any one of the three preceding claims, wherein the at least one prism (76, 78) comprises a substantially conical reflective surface (84, 86) for deflecting the beam (56) from the course that is substantially parallel to the material rod (28) into the course that is steep with respect to the material rod (28) and/or for deflecting the beam (60) from the course that is steep with respect to the material rod (28) into the course that is substantially parallel to the material rod (28).

17. Device according to the preceding claim, wherein the conical reflective surface (84, 86) is curved in order to generate a desired beam path (72, 74) during deflection of the beam (56, 60).

18. Device according to any one of the preceding claims 9 to 17,
comprising a prism (76) for deflecting the beam (56) from the course that is substantially parallel to the material rod (28) into the course that is steep with respect to the material rod (28),
comprising a second prism (78) for deflecting the beam (60) from the course that is steep with respect to the material rod (28) into the course that is substantially parallel to the material rod (28),
wherein the first prism (76) and the second prism (78) are constructed in one piece.

19. Device according to any one of the preceding claims 9 to 18,
comprising at least two detectors (62),
wherein the at least two detectors (62) are annularly arranged, preferably with equal spacing from each other.

20. Device according to any one of the preceding claims 9 to 19,
comprising at least two optical beams (56),
wherein the at least two optical beams (56) are annularly provided, preferably with equal spacing from each other.

21. Device according to any one of the preceding claims 9 to 20,
comprising at least one light source (54) for providing the optical beam (56).

22. Device according to the preceding claim, wherein the at least one, preferably white, light source (54) includes at least one light emitting diode and/or at least one laser.

23. Device according to any one of the preceding claims 9 to 21, wherein focussing optics (66), preferably comprising a focussing lens (68) and/or a diaphragm (70), is provided between reflection and detection of the beam (60, 64).

## Revendications

1. Procédé pour le contrôle optique d'un boudin de matière (28) de l'industrie de transformation du tabac, en particulier d'un boudin de cigarette (28), comprenant les étapes:
au moins un rayon optique (56) est mis à disposition dans une direction sensiblement parallèle au boudin de matière (28),
le rayon (56) est dévié, afin de venir frapper le boudin de matière (28) sous un angle à forte pente (α),
le rayon (60) réfléchi par le boudin de matière (28) suivant un angle à forte pente (β) par rapport au boudin de matière (28), est dévié dans une direction d'orientation sensiblement parallèle au boudin de matière (28); et
le rayon (64) d'orientation sensiblement parallèle au boudin de matière (28) est détecté,
**caractérisé en ce qu'**est utilisé, comme angle à forte pente (α) de la frappe incidente et/ou comme angle à forte pente (β) de la réflexion, un angle (α, β) se situant entre environ 65° et environ 90°, entre le boudin de matière (28) et le rayon (56, 60).

2. Procédé selon la revendication précédente,
selon lequel comme angle à forte pente (α) de la frappe incidente et/ou comme angle à forte pente (β) de la réflexion, est utilisé un angle (α, β) se situant entre environ 75° et environ 90°.

3. Procédé selon l'une des revendications précédentes,
selon lequel la déviation du rayon (56) de l'orientation sensiblement parallèle au boudin de matière (28) dans l'orientation sous forte pente par rapport au boudin de matière (28) et/ou de l'orientation sous forte pente par rapport au boudin de matière (28) dans l'orientation sensiblement parallèle au boudin de matière (28), est effectuée au moyen d'une trajectoire de rayon formatrice d'image (72, 74).

4. Procédé selon la revendication précédente,
selon lequel au moins une réflexion du rayon (56, 60) est effectuée sur la trajectoire de rayon formatrice d'image (72, 74).

5. Procédé selon la revendication précédente,
selon lequel la au moins une réflexion est effectuée au niveau d'un plan lisse et/ou incurvé (84, 86) d'un changement d'indice de réfraction.

6. Procédé selon l'une des revendications précédentes,
selon lequel est utilisée comme rayon optique (56), de la lumière blanche (56), de préférence engendrée au moyen d'une diode luminescente (54).

7. Procédé selon l'une des revendications précédentes,
selon lequel la détection du rayon (64) comprend la génération d'un signal de mesure et, de préférence par comparaison avec un signal de référence, l'évaluation du signal de mesure.

8. Procédé selon la revendication précédente,
selon lequel l'évaluation du signal de mesure se fait au moyen d'une comparaison vis-à-vis d'une valeur limite supérieure et/ou d'une valeur limite inférieure.

9. Dispositif pour le contrôle optique d'un boudin de matière (28) de l'industrie de transformation du tabac, en particulier d'un boudin de cigarette (28), comportant:
un premier système optique (52) destiné à dévier au moins un rayon optique (56) mis à disposition dans une direction sensiblement parallèle au boudin de matière (28), pour amener le rayon (56) à venir frapper le boudin de matière (28) sous un angle à forte pente (α),
un deuxième système optique (58) destiné à dévier le rayon (60), réfléchi par le boudin de matière (28) sous un angle à forte pente (β) par rapport au boudin de matière (28), dans une direction d'orientation sensiblement parallèle au boudin de matière (28), et
au moins un détecteur (62) destiné à détecter le rayon (64) d'orientation sensiblement parallèle au boudin de matière (28), **caractérisé en ce que** l'angle à forte pente (α) de la frappe incidente et/ou l'angle à forte pente (β) de la réflexion, entre le boudin de matière (28) et le rayon (56, 60), se situe entre environ 65° et environ 90°.

10. Dispositif selon la revendication précédente,
dans lequel l'angle à forte pente (α) de la frappe incidente et/ou l'angle à forte pente (β) de la réflexion, entre le boudin de matière (28) et le rayon (56, 60), se situe entre environ 75° et environ 90°C.

11. Dispositif selon l'une des deux revendications précédentes,
dans lequel le premier et/ou le deuxième système optique (52, 58) présente une trajectoire de rayon formatrice d'image (72, 74) destinée à dévier le rayon (56, 60) de l'orientation sensiblement parallèle au boudin de matière (28) dans l'orientation à forte pente par rapport au boudin de matière (28) et/ou de l'orientation à forte pente par rapport au boudin de matière (28) dans l'orientation sensiblement parallèle au boudin de matière (28).

12. Dispositif selon l'une des trois revendications précédentes,
dans lequel le premier et/ou le deuxième système optique (52, 58) présente au moins un prisme optique (76, 78) destiné à dévier le rayon (56, 60) de l'orientation sensiblement parallèle au boudin de matière (28) dans l'orientation à forte pente par rapport au boudin de matière (28) et/ou de l'orientation à forte pente par rapport au boudin de matière (28) dans l'orientation sensiblement parallèle au boudin de matière (28).

13. Dispositif selon la revendication précédente,
dans lequel le au moins un prisme (76, 78) est réalisé sous la forme d'un prisme polygonal.

14. Dispositif selon l'une des deux revendications précédentes,
dans lequel le au moins un prisme (76, 78) est réalisé sous une forme torique.

15. Dispositif selon l'une des trois revendications précédentes,
dans lequel le au moins un prisme (76, 78) fait partie d'une trajectoire de rayon formatrice d'image (72, 74).

16. Dispositif selon l'une des trois revendications précédentes,
dans lequel le au moins un prisme (76, 78) présente une surface de miroir (84, 86) de forme sensiblement conique, destinée à dévier le rayon (56) de l'orientation sensiblement parallèle au boudin de matière (28) dans l'orientation à forte pente par rapport au boudin de matière (28) et/ou à dévier le rayon (60) de l'orientation à forte pente par rapport au boudin de matière (28) dans l'orientation sensiblement parallèle au boudin de matière (28).

17. Dispositif selon la revendication précédente,
dans lequel la surface de miroir (84, 86) de forme conique est dotée d'une configuration incurvée, afin d'engendrer une trajectoire de rayon (72, 74) souhaitée lors de la déviation du rayon (56, 60).

18. Dispositif selon l'une des revendications précédentes 9 à 17,
comportant un premier prisme (76) destiné à dévier le rayon (56) de l'orientation sensiblement parallèle au boudin de matière (28) dans l'orientation à forte pente par rapport au boudin de matière (28),
comportant un deuxième prisme (78) destiné à dévier le rayon (60) de l'orientation à forte pente par rapport au boudin de matière (28) dans l'orientation sensiblement parallèle au boudin de matière (28),
le premier (76) et le deuxième prisme (78) étant réalisés en une seule pièce.

19. Dispositif selon l'une des revendications précédentes 9 à 18,
comportant au moins deux détecteurs (62),
dans lequel les au moins deux détecteurs (62) sont disposés sous une forme annulaire, de préférence à égale distance l'un de l'autre.

20. Dispositif selon l'une des revendications précédentes 9 à 19,
comportant au moins deux rayons optiques (56),
dans lequel les au moins deux rayons optiques (56) sont mis à disposition sous une forme annulaire, de préférence à égale distance l'un de l'autre.

21. Dispositif selon l'une des revendications précédentes 9 à 20,
comportant au moins une source de lumière (54), pour la mise à disposition du rayon optique (56).

22. Dispositif selon la revendication précédente,
dans lequel la au moins une source de lumière (54), de préférence de lumière blanche, comprend au moins une diode luminescente et/ou au moins un laser.

23. Dispositif selon l'une des revendications précédentes 9 à 21,
dans lequel est prévu, entre la réflexion et la détection du rayon (60, 64), un système optique de formation d'image (66) comprenant, de préférence, une lentille de focalisation (68) et/ou un diaphragme (70).
